# EUROPÄISCHE PATENTSCHRIFT

(11) **EP 0 456 169 B1**
(45) Veröffentlichungstag und Bekanntmachung des Hinweises auf die Patenterteilung: **15.03.1995**
(21) Anmeldenummer: 91107348.4
(22) Anmeldetag: 07.05.1991
(51) Int. Cl.: H02K 17/30, H02K 11/00

(54) **Frequenzumrichtergespeister Elektromotor**
Electric motor fed by frequency converter
Moteur électrique alimenté par convertisseur de fréquence

(30) Priorität: 11.05.1990 DE 4015080
(43) Veröffentlichungstag der Anmeldung: 13.11.1991
(73) Patentinhaber: GRUNDFOS INTERNATIONAL A/S, DK-8850 Bjerringbro (DK)
(72) Erfinder: Jensen, Niels Due, DK-8850 Bjerringbro (DK); Petersen, Bjarne Dissing, DK-8450 Hammel (DK); Poulsen, Preben, DK-8210 Aarhus V (DK)
(74) Vertreter: Vollmann, Heiko, Dipl.-Ing.

(56) Entgegenhaltungen:
- FR-A- 2 219 559
- FR-A- 2 608 856
- US-A- 3 226 581
- US-A- 4 670 678
- PATENT ABSTRACTS OF JAPAN, vol. 9, no. 19 (E-292)(1742) 25 Januar 1985; & JP-A-59 165941 (HITACHI) 19 September 1984

## Beschreibung

Die Erfindung betrifft einen frequenzumrichtergespeisten Elektromotor gemäß den im Oberbegriff des Anspruchs 1 bzw. den im Oberbegriff des Anspruchs 2 angegebenen Merkmalen.

Motoren mit integrierter Umrichterelektronik werden dort eingesetzt, wo es vorteilhaft ist, Antriebe ohne besonderen Installationsaufwand mit verschiedenen Drehzahlen einzusetzen.

Aus DE 36 42 724 ist ein derartiger Motor bekannt. Zur Kühlung der im Klemmenkasten angeordneten Elektronik wird der Boden des Klemmenkastens zum Wärmetransport herangezogen und auf der Außenseite berippt. Ein solcher Klemmenkasten muß, um die Wärme gut abführen zu können, aus einem metallischen Material mit gutem Wärmeleitvermögen bestehen.

Aus JP 59-165 941 ist ein Motor bekannt, bei dem die Umrichterelektronik innerhalb des am Motorgehäuse schraubbefestigten Klemmenkastens untergebracht ist. Dieser Klemmenkasten weist eine zentrale Bodendurchbrechung auf, welche mit einer entsprechenden Durchbrechung im Motorgehäuse fluchtet, durch welche die elektrische Leitungsverbindung zwischen Umrichterelektronik und Motor geführt ist. Der Klemmenkasten selbst besteht aus Metall und wird zusammen mit dem Motorgehäuse von einem Kühlluftstrom beaufschlagt. Um die in der Umrichterelektronik entstehende Verlustwärme gut abführen zu können muß auch hier der Klemmenkasten aus wärmeleitfähigem (metallischem) Material bestehen.

In DE 33 32 515 ist ein an das Motorgehäuse angegossener Klemmenkasten gezeigt, dessen Boden zur Aufnahme der Elektronik vorgesehen ist, wobei das Motorgehäuse als Wärmesenke genutzt wird.

Auch bei der dort beschriebenen Ausführung muß der Klemmenkasten, da er Bestandteil des Motorgehäuses ist, aus metallischem Werkstoff bestehen.

In DE 36 02 606 ist ein separater Klemmenkasten beschrieben, bei dem die Elektronik nicht am Boden, sondern im Deckel angeordnet ist. Der Klemmenkasten selbst ist dabei isoliert vom Motorgehäuse angebracht. Jedoch muß auch hier der Klemmenkasten zum Zwecke der Kühlung aus metallischem Werkstoff gefertigt sein, da er als Kühlfläche dient.

Ausgehend von einem Stand der Technik, wie er beispielhaft in JP 59-165 941 beschrieben ist, liegt der Erfindung die Aufgabe zugrunde, einen gattungsgemäßen frequenzumrichtergespeisten Elektromotor zu schaffen, dessen Klemmenkasten weder in der Gestaltung noch in der Werkstoffwahl thermodynamischen Bindungen unterliegt, so daß dieser Klemmenkasten auch in Verbindung mit anderen Motorbauarten eingesetzt werden kann. Diese Aufgabe wird gemäß der Erfindung bei einem Elektromotor, dessen Abwärme mittels eines an der Außenseite des Motors vorbeigeführten Kühlluftstromes abführbar ist, mit den im kennzeichnenden Teil des Anspruchs 2 aufgeführten Merkmalen gelöst. Für einen Elektromotor, dessen Abwärme durch Innenkühlung abführbar ist, beispielsweise bei einem Naßlaufmotor, wird die erfindungsgemäße Aufgabe durch die im kennzeichnenden Teil des Anspruchs 1 aufgeführten Merkmale gelöst.

Durch die erfindungsgemäße Lösung ist es möglich, die Verlustwärme der Elektronik direkt an eine Kühlfläche zu bringen, ohne den Klemmenkasten selbst zum Wärmetransport heranzuziehen. Dadurch ergibt sich ein großer Gestaltungsfreiraum in der Formgebung und Materialgebung des Klemmenkastens.

Da nunmehr der Klemmenkasten unabhängig von Kühlerfordernissen der darin angeordneten Bauteile ist, kann er in seiner Form nach anderen Kriterien, wie beispielsweise Baukosten, Baugröße etc. gestaltet werden. Durch die Erfindung kann der Klemmenkasten (sowohl der Deckel als auch der Rumpf) aus jedem beliebigen Material, insbesondere aus den heute üblichen elektrisch isolierenden Polymerwerkstoffen bestehen, so daß er kostengünstig herstellbar ist. Da erfindungsgemäß der größte Teil der Verlustwärme der Frequenzumrichterelektronik durch die Gehäusedurchbrechung abgeführt wird, ist die thermische Belastung des Gehäuses, insbesondere im Deckelbereich wesentlich geringer als bei den bekannten Konstruktionen. Innerhalb des Gehäuses bilden sich daher unterschiedliche Temperaturzonen aus. Somit können die elektronischen Bauteile des Frequenzumrichters in unterschiedlichen Temperaturzonen angeordnet werden, wobei Bauteile höherer Temperaturempfindlichkeit in Zonen niedriger Temperatur und umgekehrt angeordnet werden können. Hierdurch kann die in der Regel temperaturabhängige Lebensdauer der Bauteile durch entsprechende Anordnung aufeinander abgestimmt werden.

Ein weiterer Vorteil der thermodynamisch von der Elektronik weitgehend unabhänigen Klemmenkastenform ist die Anwendung des Klemmenkastens für Motoren verschiedener Bauarten. So kann der gleiche Klemmenkasten sowohl für einen außengekühlten Normmotor als auch für einen innengekühlten Naßlaufmotor verwendet werden, wobei dieser Klemmenkasten sogar für Motoren ohne Drehzahlsteuerung einsetzbar ist.

Gemäß der Erfindung ist der Leistungsteil des Frequenzumrichters an einer wärmeleitenden Platte angeordnet, die im Bereich der Gehäusedurchbrechung sitzt. Hierdurch wird die Verlustwärme des Leistungsteils aus dem Klemmenkastengehäuse abgeführt. Da ein solcher Klemmenkasten sowohl für einen außengekühlten Normmotor als auch für einen innengekühlten Naßlaufmotor verwendet werden kann - im ersteren Fall ist an der wärmeleitenden Platte eine Berippung vorgesehen und diese zusammen mit dem Klemmenkasten beabstandet zum Motorgehäuse angeordnet, im letzteren Fall ist die wärmeleitende Platte wärmeleitend mit dem Motorgehäuse verbunden - ist es je nach Motorbauart also nur erforderlich, die wärmeleitende Platte und einige Befestigungskomponenten auszutauschen. Dieses beinhaltet große montagemäßige und lagerhaltungstechnische Vorteile.

Die wärmeleitende Platte ermöglicht es also, die im Leistungsteil des Frequenzumrichters entstehende Abwärme möglichst schnell und unter Vermeidung von Wärmestaus aus dem Klemmenkasten abzuführen und bildet somit einen Wämeanschluß im Bereich der Gehäusedurchbrechung. Die wärmeleitende Platte kann einerseits den Klemmenkasten zum Motor hin zumindest teilweise abschließen und bildet andererseits einen Wärmeanschluß, über den die Verlustwärme - wie auch immer - abgeführt werden kann. Der Klemmenkasten bildet somit eine Art Modul, das über die wärmeleitende Platte als Wärmeanschluß an verschiedene Wärmesenken schnell und einfach anschließbar ist, ohne daß Veränderungen am oder im Klemmenkasten erforderlich sind.

Bei einem Elektromotor, dessen Abwärme mittels eines an der Gehäuseaußenseite vorbeigeführten Kühlluftstromes abführbar ist und dessen Klemmenkasten vom Motor beabstandet ist (aussengekühlter Motor), ist es von Vorteil, Kühlrippen des Leistungsteils durch die Gehäusedurchbrechung in den Kühlluftstrom ragen zu lassen, so daß die Verlustwärme des Leistungsteils durch den Kühlluftstrom im Bereich zwischen Motor und Klemmenkasten abgeführt wird.

Bei derartigen Motoren ist es üblich, das Gehäuse zum Zwecke der besseren Kühlung mit Kühlrippen zu versehen. Um bei guter Kühlung eine räumlich enge und somit platzsparende Anordnung von Motor und Klemmenkasten zu erreichen, werden die Kühlrippen des Leistungsteils mit Abstand zwischen den Kühlrippen des Motorgehäuses angeordnet, so daß beispielsweise jede Kühlrippe des Leistungsteils zu einer Kühlrippe des Motors benachbart ist.

Um einen guten Wärmeübergang zwischen der wärmeleitenden Platte und dem Kühlkörper - sofern der Kühlkörper nicht einstückig mit der wärmeleitenden Platte ausgebildet ist - zu erreichen, ist es vorteilhaft, an der wärmeleitenden Platte einen einstückig mit dieser ausgebildeten in Richtung auf das Motorgehäuse gerichteten zylindrischen Teil vorzusehen, auf dem dann ein Kühlkörper aufgeschrumpft wird. Die vorgeschriebene Schrumpfverbindung ist in diesem Fall besonders günstig, da sich mit steigender Temperaturdifferenz zwischen Kühlkörper und wärmeleitender Platte der Wärmeübergang zwischen diesen Bauteilen aufgrund der unterschiedlichen Wärmedehnung verbessert und somit dann auch die Kühlung verbessert ist. Eine zweiteilige Ausbildung von wärmeleitender Platte und Kühlkörper, insbesondere mit dem vorbeschriebenen zylindrischen Ansatz hat weiterhin den Vorteil, daß die gleiche wärmeleitende Platte für unterschiedliche Motorbauarten einsetzbar ist, wobei entweder ein Kühlkörper auf der wärmeleitenden Platte wärmeleitend befestigt wird oder aber die wärmeleitende Platte gegebenenfalls nach Entfernung des zylindrischen Ansatzes, was fertigungstechnisch kostengünstig erfolgen kann, wärmeleitend mit dem Motorgehäuse verbunden wird. Eine solche Ausführung, bei der der Leistungsteil zum Zwecke der Kühlung wärmeleitend mit dem Motorgehäuse verbunden wird, ist zum Beispiel für Naßlaufmotoren vorgesehen, die über das zu fördernde Fluid gekühlt werden, so daß das Motorgehäuse als Wärmesenke genutzt werden kann.

Da es für die Abfuhr der Verlustwärme des Leistungsteils von ganz erheblicher Bedeutung ist, wie gut der Wämeübergang zwischen der klemmenkastenseitigen wärmeleitenden Platte einerseits und dem Motorgehäuse andererseits ist, wird die wärmeleitende Platte vorteilhaft durch Kraftschluß an einer Planfläche des Motorgehäuses angeschlossen, so daß ein großflächiger Wärmeübergang geschaffen wird, der im wesentlichen unabhängig vo Wärmedehnungen und anderen Einflüssen ist.

Um eine solche kraftschlüssige Anlage der wärmeleitenden Platte am Motorgehäuse zu gewährleisten, ist es von Vorteil, zumindest die wärmeleitende Platte mit der Leistungselektronik innerhalb des Klemmenkastens beweglich zu lagern, um unabhängig von Fertigungsungenauigkeiten die plane Anlage der wärmeleitenden Platte am Motorgehäuse sicherzustellen.

Vorteilhaft wird der Kraftschluß zwischen der wärmeleitenden Platte und der Planfläche des Motorgehäuses durch Federkraft erzeugt, so daß bei genügendem Federweg eine sichere wärmeleitende Anlage stets gewährleistet ist.

Eine derartige Feder kann zum Beispiel durch ein rechteckiges oder U-förmiges Federblech gebildet sein. Ein solches gewölbtes Federblech stützt sich am Klemmenkasten einerseits und an der wärmeleitenden Platte andererseits ab und wird durch das Verschrauben des Klemmenkastens mit dem Motorgehäuse verspannt. Auf diese Weise entsteht der Kraftschluß zwischen der wärmeleitenden Platte und dem Motorgehäuse.

Die Erfindung ist nachfolgend anhand von in Zeichnungen dargestellten Ausführungsbeispielen näher erläutert. Es zeigen:
- Figur 1: die Seitenansicht eines Elektromotors mit am Motorgehäuse befestigten Klemmkasten,
- Figur 2: in vergößerter Darstellung einen Schnitt längs der Schnittlinie II-II in Figur 1 und
- Figur 3: in schematischer Darstellung einen Schnitt durch einen Naßlaufmotor einer Kreiselpumpe mit am Motorengehäuse angeordneten Klemmenkasten.

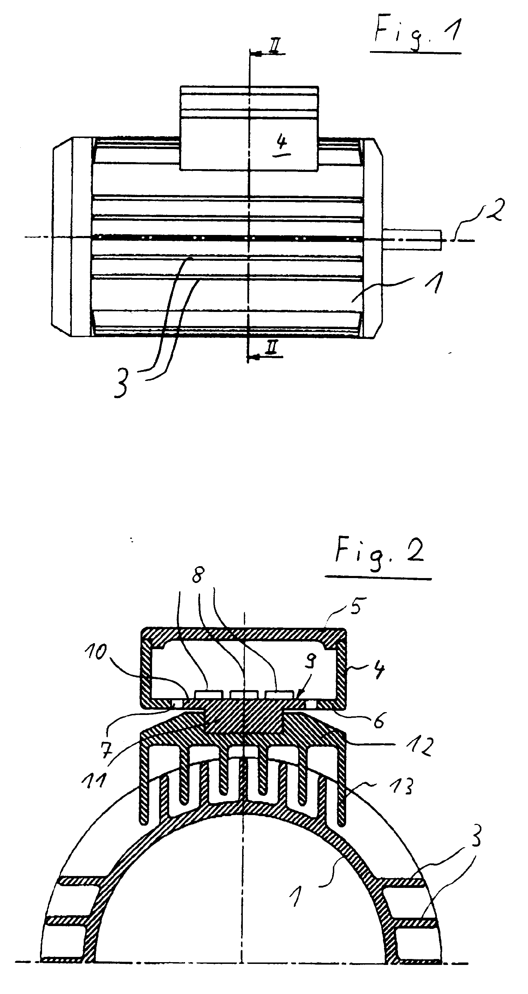

Der anhand der Figuren 1 und 2 nicht im einzelnen dargestellte Elektromotor weist ein Gehäuse 1 auf, das über seinen Außenumfang verteilt und parallel zur Motorachse 2 angeordnete Kühlrippen 3 aufweist, über die die innerhalb des Elektromotors entstehende Verlustwärme nach außen durch Konvektion oder zusätzlich mittels eines Kühlluftstromes abgeführt wird.

An dem Motorengehäuse 1 ist ein Klemmenkasten 4 mittels in den Figuren nicht dargestellten Bolzen schraubbefestigt. Der Klemmenkasten ist in seiner Außenkontur etwa quaderförmig und wird nach oben hin durch einen Deckel 5 abgeschlossen. An seiner dem Deckel gegenüberliegenden, zum Motorgehäuse 1 hin weisenden Seite weist der Klemmenkasten 4 einen einstückig mit diesem ausgebildeten Boden 6 auf, der eine zentrale Ausnehmung 7 in Form einer flächigen Durchbrechung aufweist.

Innerhalb des Klemmenkastens ist bei der dargestellten Ausführung die Frequenzumrichterelektronik, insbesondere der in Figur 2 mit 8 gekennzeichnete Leistungsteil der Frequenzumrichterelektronik angeordnet. Dieser Leistungsteil 8 ist wärmeleitend mit einer wärmeleitenden Platte 9 verbunden, die bei der dargestellten Ausführung aus einer Platte 10 sowie einem einstückig damit ausgebildeten zylindrischen Ansatz 11 gebildet ist, der sich von der Platte 10 aus in Richtung auf das Motorgehäuse hin erstreckt. Die wärmeleitende Platte 9 besteht aus einem hochwärmeleitfähigen Material, zum Beispiel Kupfer und liegt innerhalb der Gehäusedurchbrechung 7.

Der zylindrische Ansatz 11 erstreckt sich mit Abstand zur Außenkontur des Gehäuses 1 und ist wärmeleitend mit einem an seinem Außenumfang aufgeschrumpften Kühlkörper 12 verbunden. Der Kühlkörper weist Kühlrippen 13 auf, die sich bis nahe zum Gehäuse 1 des Elektromotors erstrecken und jeweils zwischen den Kühlrippen 3 des Gehäuses 1 angeordnet sind, so daß diese in den am Motorgehäuse 1 vorbeistreichenden Kühlluftstrom ragen.

Die innerhalb des Leistungsteils 8 des Frequenzumrichters entstehende Verlustwärme wird über die wärmeleitende Platte 9 und den damit wärmeleitend verbundenen Kühlkörper 12 aus dem Klemmenkasten 4 herausgeführt, und zwar in der anhand der Figuren 1 und 2 dargestellten Ausführung über den Kühlluftstrom des Elektromotors. Durch diesen Weg der Wärmeabfuhr kann der Klemmenkasten nahezu beliebig ausgestaltet werden und, wie bei der dargestellten Ausführung aus Kunststoff hergestellt sein. Der Leistungsteil 8 des Frequenzumrichters, die wärmeleitende Platte 9 und der Kühlkörper 12 sind entweder unmittelbar oder über Isolatoren mit dem Klemmenkasten 4 verbunden.

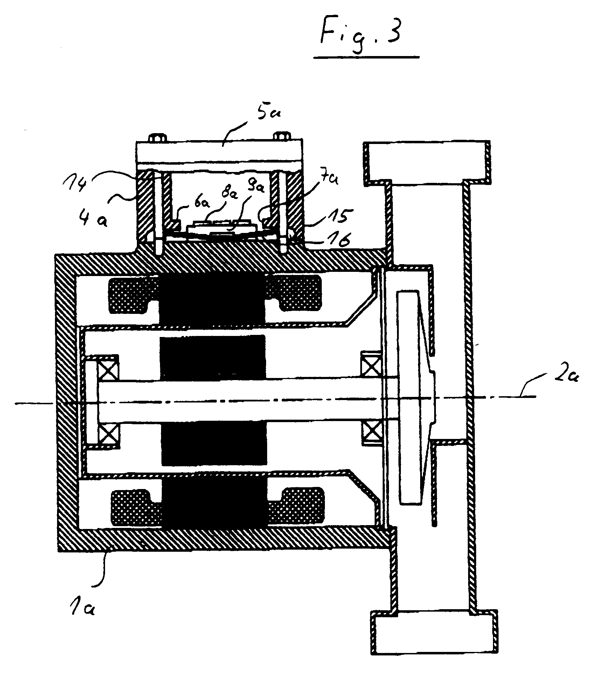

Bei der anhand von Figur 3 dargestellten Ausführung sind Bauteile, die hinsichtlich ihrer Funktion denen der vorbeschriebenen Ausführung entsprechend, jedoch konstruktiv an die spezielle Ausführung angepaßt sind mit entsprechenden, mit "a" gekennzeichneten Bezugszeichen versehen. Das Motorengehäuse 1a des in Figur 3 dargestellten Elektromotors wird durch das von der durch den Elektromotor angetriebenen Kreiselpumpe geförderte Medium gekühlt, wie dies bei Naßlaufmotoren üblich ist. Der Klemmenkasten 4a ist über Zuganker 14 an einer Planfläche 15 des Motorgehäuses 1a befestigt. Auch dieser Klemmenkasten 4a weist einen Deckel 5a auf, sowie einen parallel dazu angeordneten Boden 6a, in dessen Durchbrechung 7a eine wärmeleitende Platte 9a angeordnet ist, die mit dem Leistungsteil 8a des Frequenzumrichters wärmeleitend verbunden ist. Die wärmeleitende Platte 9a ist jedoch im Unterschied zu der vorbeschriebenen Ausführung als an der Unterseite plane Platte ausgebildet, die mittels eines die wärmeleitende Platte 9a seitlich übergreifenden Federbleches 16 wärmeleitend an die Planfläche 15 des Motorgehäuses 1a gedrückt wird. Das Federblech 16 stützt sich an einem Innenwulst oder wie in Figur 3 dargestellt am Boden 6a des Klemmenkastens ab und ist über die Zuganker 14 mittelbar über den Klemmenkasten 4a vorgespannt. Die wärmeleitende Platte 9a ist somit beweglich innerhalb des Klemmenkastens gelagert und wird durch die Federkraft des Bleches 16 kraftschlüssig an das Motorgehäuse 1a gedrückt, um die im Leistungsteil 8a des Frequenzumrichters entstehende Abwärme über die wärmeleitende Platte 9a und das Motorgehäuse 1a abzuführen.

Der Klemmenkasten 4a besteht aus Kunststoff, kann jedoch aus jedem anderen geeigneten Material bestehen, an das hinsichtlich der Wärmeleiteigenschaften keine besonderen Anforderungen gestellt sind, da die Abwärme des Leistungsteils 8a durch die Gehäusedurchbrechung 7a abgeführt wird.

## Patentansprüche

1. Frequenzumrichtergespeister Elektromotor mit einem am Motorgehäuse (1a) angeordneten Klemmenkasten (4a), der mindestens den Leistungsteil (8a) des Frequenzumrichters aufnimmt und an seiner dem Motor zugewandten Seite eine Gehäusedurchbrechung (7a) aufweist, dadurch gekennzeichnet, daß die Gehäusedurchbrechung (7a) von einer den Klemmenkasten (4a) in diesem Bereich im wesentlichen abschließenden wärmeleitenden Platte (9a) als Wärmeanschluß durchsetzt ist, über die die innerhalb des Klemmenkastens (4a) im Leistungsteil (8a) erzeugte Wärme an eine daran angeschlossenen Wärmesenke abführbar ist und daß die wärmeleitende Platte (9a) kraftschlüssig an einer Kühlfläche (15) des Motorgehäuses (1a) anliegt.

2. Frequenzumrichtergespeister Elektromotor mit einem beanstandet am Motorgehäuse angeordneten Klemmenkasten (4), der mindestens den Leistungsteil (8) des Frequenzumrichters aufnimmt und an seiner dem Motor zugewandten Seite eine Gehäusedurchbrechung (7) aufweist, und bei dem die Abwärme des Motors mittels eines an der Gehäuseaußenseite vorbeigeführten Kühlluftstromes abführbar ist, dadurch gekennzeichnet, daß Kühlrippen (13) des Leistungsteiles (8) durch die Gehäusedurchbrechung (7) in den Kühlluftstrom ragen.

3. Motor nach Anspruch 2, mit an der Gehäuseaußenseite angeordneten Kühlrippen (3), dadurch gekennzeichnet, daß die Kühlrippen (13) des Leistungsteiles (8) mit Abstand zwischen den Kühlrippen (3) des Motorgehäuses (1) angeordnet sind.

4. Motor nach Anspruch 2 oder 3, dadurch gekennzeichnet, daß die wärmeleitende Platte (9) einen sich von einer Platte (10) in Richtung auf das Motorgehäuse (1) erstreckenden zylindrischen Teil (11) aufweist, auf dem ein Kühlkörper (12) aufgeschrumpft ist.

5. Motor nach Anspruch 1, dadurch gekennzeichnet, daß die wärmeleitende Platte (9a) zur wärmeleitenden Anlage am Motorgehäuse (1a) beweglich innerhalb des Klemmenkastens (4a) gelagert ist.

6. Motor nach Anspruch 1 oder 5, dadurch gekennzeichnet, daß die wärmeleitende Platte (9a) mittels einer Feder (16) gegen das Motorgehäuse (1a) gedrückt wird.

7. Motor nach Anspruch 6, dadurch gekennzeichnet, daß das Federblech (16) zwischen dem Klemmenkasten (4a) und dem Motorgehäuse (1a) angeordnet und zwischen Klemmenkasten (4a) und der Platte (9a) verspannt ist.

## Claims

1. Electric motor fed by frequency converter having a terminal box (4a) arranged on the motor housing (1a), which terminal box (4a) receives at least the power part (8a) of the frequency converter and has an opening (7a) in the housing on its side facing the motor, characterised in that the opening (7a) in the housing is penetrated by a heat-conducting plate (9a) as a heat connection essentially sealing the terminal box (4a) in this region, by means of which heat-conducting plate (9a) the heat produced in the power part (8a) within the terminal box (4a) can be removed to a heat sink connected thereto, and in that the heat-conducting plate (9a) rests non-positively against a cooling surface (15) of the motor housing (1a).

2. Electric motor fed by frequency converter having a terminal box (4) arranged at a distance from the motor housing, which terminal box (4) receives at least the power part (8) of the frequency converter and has an opening (7) in the housing on its side facing the motor, and in which the waste heat from the motor can be removed by means of a cooling air stream conducted past the external side of the housing, characterised in that cooling ribs (13) of the power part (8) project into the cooling air stream through the opening (7) in the housing.

3. Motor according to claim 2, with cooling ribs (3) arranged on the external side of the housing, characterised in that the cooling ribs (13) of the power part (8) are arranged at a distance between the cooling ribs (3) of the motor housing (1).

4. Motor according to claim 2 or 3, characterised in that the heat-conducting plate (9) has a cylindrical part (11) extending from a plate (10) in the direction of the motor housing (1), onto which cylindrical part (11) a cooling body (12) is shrink-fitted.

5. Motor according to claim 1, characterised in that the heat-conducting plate (9a) is mounted movably within the terminal box (4a) for heat-conducting positioning on the motor housing (1a).

6. Motor according to claim 1 or 5, characterised in that the heat-conducting plate (9a) is pressed against the motor housing (1a) by means of a spring (16).

7. Motor according to claim 6, characterised in that the spring plate (16) is arranged between the terminal box (4a) and the motor housing (1a) and is braced between terminal box (4a) and the plate (9a).

## Revendications

1. Moteur électrique alimenté par un convertisseur de fréquence et comportant une boîte à bornes (4a) disposée sur le carter (1a) du moteur et qui loge au moins la partie de puissance (8a) du convertisseur de fréquence et possede, sur son côté tourné vers le moteur, un perçage (7a) dans son carter, caractérisé par le fait que le perçage (7a) du carter est traversé par une plaque thermoconductrice (9a), qui ferme pour l'essentiel la boîte à bornes (4a) dans cette zone et sert de raccord thermique et au moyen de laquelle la chaleur engendrée à l'intérieur de la boîte à bornes (4a) dans la partie de puissance (8a) peut être évacuée en direction d'un puits de chaleur qui y est raccordé, et en ce que la plaque thermoconductrice (9a) s'applique, selon une liaison de force, contre une surface de refroidissement (15) du carter (1a) du moteur.

2. Moteur électrique alimenté par un convertisseur de fréquence et comportant une boîte à bornes (4) disposée à distance sur le carter du moteur, qui loge au moins la partie de puissance (8) du convertisseur de fréquence et comporte, sur son côté tourné vers le moteur, un perçage (7) dans son carter, et dans lequel la chaleur dégagée par le moteur peut être évacuée au moyen d'un courant d'air de refroidissement, qui circule le long de la face extérieure du carter, caractérisé par le fait que des ailettes de refroidissement (13) de la partie de puissance (8) pénètrent dans le courant d'air de refroidissement, à travers le perçage (7) ménagé dans le carter.

3. Moteur selon la revendication 2, comportant des ailettes de refroidissement (3) disposées sur la face extérieure du carter, caractérisé en ce que les ailettes de refroidissement (13) de la partie de puissance (8) sont disposées entre les ailettes de refroidissement (3) du carter (1) du moteur, à distance de celles-ci.

4. Moteur selon la revendication 2 ou 3, caractérisé en ce que la plaque thermoconductrice (9) possede une partie cylindrique (11) qui s'étend depuis une plaque (10) en direction du carter (1) du moteur et sur laquelle est emmanché un corps de refroidissement (12).

5. Moteur selon la revendication 1, caractérisé en ce que la plaque thermoconductrice (9a) est montée déplaçable à l'intérieur de la boite à bornes (4a), de manière à s'appliquer, en établissant un contact thermoconducteur, sur le carter (1a) du moteur.

6. Moteur selon la revendication 1 ou 5, caractérisé en ce que la plaque thermoconductrice (9a) est repoussée au moyen d'un ressort (16) contre le carter (1a) du moteur.

7. Moteur selon la revendication 6, caractérisé en ce que la lame de ressort (16) est disposée entre la boîte à bornes (4a) et le carter (1a) du moteur et est tendue entre la boîte à bornes (4a) et la plaque (9a).
